# EUROPÄISCHE PATENTSCHRIFT

(11) **EP 2 935 954 B1**
(45) Veröffentlichungstag und Bekanntmachung des Hinweises auf die Patenterteilung: **03.05.2017**
(21) Anmeldenummer: 13799329.1
(22) Anmeldetag: 05.12.2013
(51) Int. Cl.: F16K 1/48, F16K 31/06

(54) **VENTIL**
VALVE
VANNE

(30) Priorität: 21.12.2012 DE 102012224130
(43) Veröffentlichungstag der Anmeldung: 28.10.2015
(73) Patentinhaber: Continental Automotive GmbH, 30165 Hannover (DE)
(72) Erfinder: BONANNO, Rosario, 65812 Bad Soden (DE)
(86) Internationale Anmeldenummer: PCT/EP2013/075681
(87) Internationale Veröffentlichungsnummer: WO 2014/095396

(56) Entgegenhaltungen:
- US-A- 5 526 837
- US-A1- 2002 088 441

## Beschreibung

Gegenstand der Erfindung ist ein Ventil mit einem Gehäuse, einem in dem Gehäuse angeordneten Solenoid, einem von dem Solenoid bewegbaren Stift und einem mit dem Stift verbundenen Kolben.

Ein derartiges Ventil wird aus der US 5 526 837 A bekannt. Solche Ventile werden unter anderem als Schubumluftventil am Turbolader in Kraftfahrzeugen eingesetzt, um im Schubbetrieb einen Bypass zur Saugseite freizugeben und sind somit bekannt. Um ein zu starkes Abbremsen des Turboladers zu verhindern aber auch ein schnelles Anfahren zu gewährleisten, ist ein schnelles Öffnen und Schließen des Ventils eine wesentliche Voraussetzung. Insbesondere beim Schließen kommt es auf das sofortige Verschließen durch das Anlegen des Kolbens an einen Ventilsitz an. Der Ventilsitz wird vom Gehäuse des Turboladers gebildet, an dem das Ventil angeflanscht wird. Das hat zur Folge, dass der Ventilsitz nicht vollkommen parallel zum Kolben steht, was für ein schnelles und vor allem dichtes Schließen erforderlich wäre. Um trotzdem ein sicheres Schließen zu gewährleisten, muss sich der Kolben an den Ventilsitz anpassen. Hierzu ist es bekannt, den Stift an seinem dem Kolben zugewandten Ende mit einem Kugelkopf auszubilden und die entsprechende Aufnahme am Kolben als Kugelpfanne zu gestalten. Nachteilig hierbei ist die aufwändige Gestaltung. Die gelenkige Anbindung des Kolbens an den Stift ermöglicht ein relativ großes Verschwenken, wobei große Schwenkwinkel beim schnellen Schließen hinderlich sind.

Der Erfindung liegt daher die Aufgabe zugrunde, ein Ventil zu schaffen, das einen einfachen Aufbau besitzt und ein schnelles und sicheres Schließen ermöglicht.

Gelöst wird die Aufgabe dadurch, dass der Kolben topfförmig gestaltet ist und sein Boden eine Öffnung aufweist, dass an der Aussenseite des Bodens ein bogenförmiger Bügel die Öffnung überspannt, dass der Stift durch die Öffnung im Boden hindurch ragt, und dass der Stift mit dem bogenförmigen Bügel mittels einer Rastverbindung verbunden ist.

Mit dem bogenförmigen Bügel wird gewährleistet, dass der Kolben relativ zum Stift verschwenkbar ist, indem sich der Bügel zum Stift verschiebt. Je nach Anwendungsfall lassen sich Schwenkwinkel von einigen Grad bis zu einigen Zehntelgrad realisieren. Mit der Wölbung des Bügels lässt sich der Schwenkwinkel des Kolbens einstellen. Dadurch ist sichergestellt, dass nur ein geringes Verschwenken des Kolbens gegenüber dem Stift möglich ist. Dieses geringe Verschwenken ist ausreichend, um die Lageabweichungen zwischen Kolben und Ventilsitz auszugleichen. Gleichzeitig wird ein schnelles Schließen des Ventils garantiert, da sich der Schwenkwinkel begrenzen lässt. Das Ventil ist so an verschiedene Anwendungsgebiete anpassbar, wodurch das Ventil ein breites Einsatzgebiet besitzt. Zudem ist der Kolben mit dem bogenförmigen Bügel relativ einfach gestaltet, was die Herstellbarkeit vereinfacht.

Die Rastverbindung lässt sich besonders einfach herstellen, wenn der Stift an seinem dem Solenoid abgewandten Ende einen Schlitz aufweist, in den der Bügel verrastet ist.

Ein sicheres Verrasten wird dadurch erreicht, dass der Schlitz eine Raststufe besitzt, die vorzugsweise dem Querschnitt des Bügels entspricht.

Eine einfache Ausgestaltung, die gleichzeitig eine gute Beweglichkeit des Kolbens gegenüber dem Stift ermöglicht, besteht darin, dass der bogenförmige Bügel einen kreisförmigen Querschnitt besitzt.

Das Herstellen der Rastverbindung wird erleichtert, wenn der Bügel auf seiner dem Boden abgewandten Seite einen Schlitz aufweist. Der Schlitz ermöglicht beim Verrasten ein elastisches Verformen mit anschließendem Entspannen beim Erreichen der Raststufe. Dadurch kann die Tiefe der Raststufe im Stift größer gestaltet werden, was eine größere Sicherheit gegen ein Lösen der Rastverbindung bewirkt.

In einer Ausgestaltung ist die Wölbung des bogenförmigen Bügels zum Boden des Kolbens hin gebogen. Eine leichtere Herstellbarkeit ist gemäß einer anderen Ausgestaltung dadurch gegeben, dass der bogenförmige Bügel vom Boden des Kolbens weg gebogen ist.

In einer weiteren vorteilhaften Ausgestaltung besitzt der innerhalb des topfförmigen Kolbens liegende Bereich des Stifts einen größeren Durchmesser als die Öffnung im Boden des Kolbens. Dadurch wird ein Durchrutschen des Stifts durch die Öffnung verhindert. Auf diese Weise erhält man eine Verliersicherung für eine sichere Montage. Gleichzeitig wird im Falle einer Beschädigung der Verbindung zwischen Stift und Kolben verhindert, dass Teile des Stifts in die Leitung gelangen.

Um die Druckbelastung des Ventils, insbesondere des Gehäuses zu reduzieren, besitzt der Kolben weitere Öffnungen im Boden.

In einer weiteren Ausgestaltung besitzt der Stift eine den Stift durchdringende Längsbohrung, über die ein Druckausgleich ins Gehäuse erfolgen kann.

Für einen noch schnelleren Druckausgleich und um gegebenenfalls Geräusche infolge des Druckausgleichs zu minimieren, besitzt der Stift zusätzlich eine rechtwinklig zur Längsachse verlaufende Querbohrung, die ebenfalls den Stift durchdringt und mit der Längsbohrung verbunden ist.

Ein schnelles Öffnen und Schließen des Ventils aufgrund geringer Massen wird mit einem Ventil erreicht, dessen Kolben aus Kunststoff besteht.

An einem Ausführungsbeispiel wird die Erfindung näher beschrieben. Es zeigt in
- Fig. 1: eine schematische Darstellung der Anordnung des Ventils,
- Fig. 2: eine Draufsicht des Ventils,
- Fig. 3: einen Schnitt durch das Ventil nach Fig. 2,
- Fig. 4: den Stift in zwei Ansichten und
- Fig. 5, 6: den Kolben in zwei Ansichten.

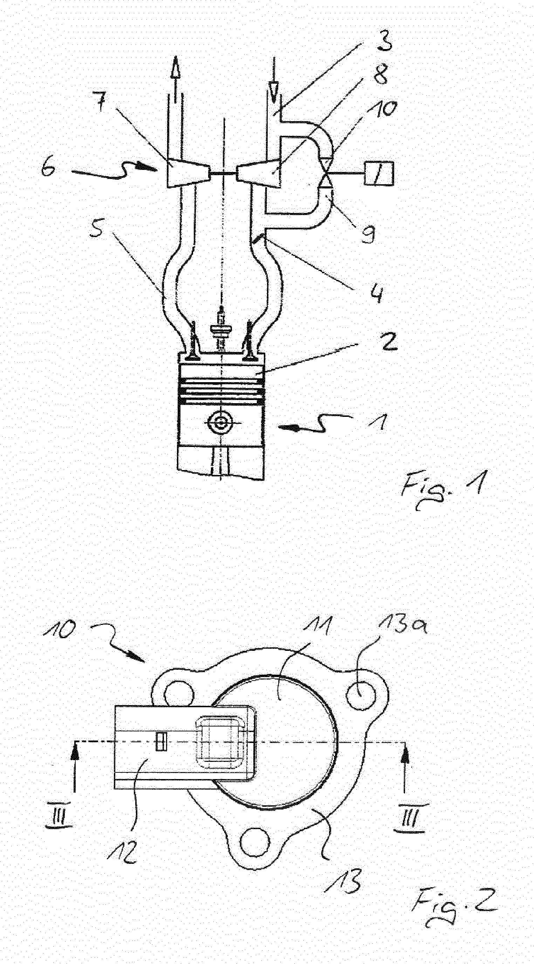

Figur 1 zeigt einen Teil des Antriebsstrangs eines Kraftfahrzeugs mit einem Zylinder 1, einem darin bewegbaren Zylinderkolben 2 und in den Zylinder 1 mündende Frischluftleitung 3 mit einer darin angeordneten Drosselklappe 4 und einer aus dem Zylinder 1 herausführenden Abgasleitung 5. Weiter ist ein Turbolader 6 angeordnet, der mit beiden Leitungen 3, 5 verbunden ist. Der Turbolader 6 besteht aus einer mit der Abgasleitung 5 verbundenen Turbine 7 und einem mit der Frischluftleitung 5 verbundenen Kompressor 8. Über eine Bypassleitung 9 kann bei schließender Drosselklappe 4 vom Kompressor 8 aufgebauter Druck durch Ableiten der verdichteten Luft zurückgeführt werden. Die Bypassleitung 9 wird durch ein Schubumluftventil 10 geöffnet oder geschlossen.

Das Ventil 10 in Fig. 2 besteht aus einem Gehäuse 11 mit einteilig angeformter Buchse 12 zum elektrischen Verbinden des Ventils 10. Das Gehäuse 11 besitzt weiter einen angeformten Flansch 13 und drei Bohrungen 13a, über die das Gehäuse 11 am Turbolader 6 im Bereich der Bypassleitung 9 angeflanscht ist.

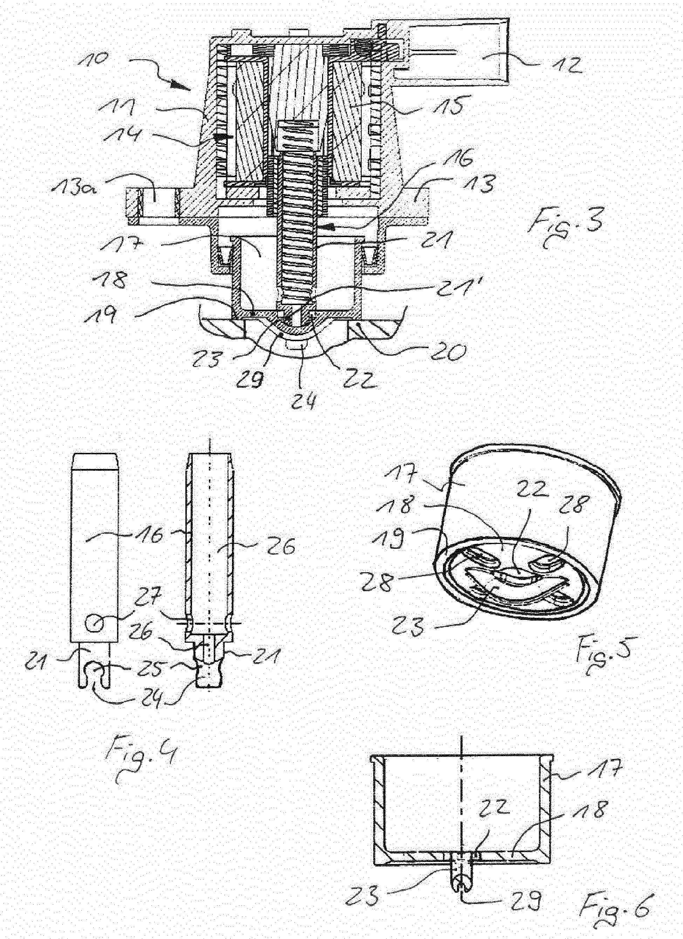

In dem Gehäuse 11 ist nach Fig. 3 ein Solenoid 14 mit einer Spule 15 und einem Metallstift 16 angeordnet. Der Metallstift 16 ist mit einem topfförmigen Kolben 17 aus Kunststoff verbunden, der am Umfang seines Bodens 18 eine umlaufende Dichtkante 19 besitzt. In der gezeigten Schließstellung liegt die Dichtkante 19 auf dem Ventilsitz 20 an, um die Bypassleitung zu verschließen. Der Stift 16 besitzt einen innerhalb des topfförmigen Kolbens 17 liegenden Bereich 21 mit einem größeren Durchmesser als die Öffnung 22 und auf seiner dem Solenoid 14 abgewandten Seite einen Bereich 21' mit kleinerem Durchmesser, der durch eine Öffnung 22 im Boden 18 hindurch ragt und mit einem bogenförmigen Bügel 23 verrastet ist, der die Öffnung 22 an der Außenseite des Bodens überspannt. Für die Verrastung weist der Stift 16 einen Schlitz 24 auf, in den der Bügel 23 eingreift. Der Schlitzgrund besitzt dabei die gleiche Wölbung wie der Bügel 23. Dies ermöglicht, dass der Bügel 23 gegenüber dem Stift verschiebbar ist, wodurch sich der Kolben 17 zum Stift 16 verschwenken lässt.

Figur 4 zeigt den Stift 16 mit dem Bereich 21 des kleineren Durchmessers, in dem der Schlitz 24 angeordnet ist. Am Schlitzgrund ist eine Raststufe 25 ausgebildet, in die der Bügel 23 einrastet. Die Raststufe 25 besitzt wie der Bügel 23 einen kreisförmigen Querschnitt. Der Stift 16 besitzt weiter eine Längsbohrung 26 und eine rechtwinklig dazu angeordnete Querbohrung 27. Beide Bohrungen 26, 27 durchdringen den Stift 16 und dienen dem Druckausgleich im Gehäuse 11, wobei die Querbohrung 25 zum schnelleren Druckausgleich vorgesehen ist.

Die Figuren 5, 6 zeigen den topfförmigen Kolben 17 mit dem Boden 18 und der Öffnung 22. An der Außenseite des Bodens 18 ist der bogenförmige Bügel 23 angeordnet, der die Öffnung 22 überspannt. Der Bügel 23 besitzt einen kreisförmigen Querschnitt, der auf der dem Kolben 17 abgewandten Seite einen Schlitz 29 aufweist. Die geschlitzte Ausführung des Bügels 23 erlaubt ein leichteres Verrasten in der Raststufe 25 des Stifts 16. Im Boden 18 sind zusätzliche Öffnungen 28 angeordnet, welche dem Druckausgleich dienen.

## Patentansprüche

1. Ventil (10) mit einem Gehäuse (11), einem in dem Gehäuse (11) angeordneten Solenoid (14), einem von dem Solenoid (14) bewegbaren Stift (16), einem mit dem Stift (16) verbundenen Kolben (17) und einer Dichtung, wobei der Kolben (17) topfförmig gestaltet ist und sein Boden (18) eine Öffnung (22) aufweist, und der Stift (16) durch die Öffnung (22) im Boden (18) hindurch ragt, **dadurch gekennzeichnet,**
**dass** an der Aussenseite des Bodens (18) ein bogenförmiger Bügel (23) die Öffnung (22) überspannt, und dass der Stift (16) mit dem bogenförmigen Bügel (23) mittels einer Rastverbindung (25) verbunden ist.

2. Ventil nach Anspruch 1, **dadurch gekennzeichnet, dass** der Stift (16) an seinem dem Solenoid (14) abgewandten Ende (21) einen Schlitz (24) aufweist.

3. Ventil nach Anspruch 2, **dadurch gekennzeichnet, dass** der Schlitz (14) eine Raststufe (25), vorzugsweise dem Querschnitt des Bügels (23) entsprechend, besitzt.

4. Ventil nach zumindest einem der vorhergehenden Ansprüche, **dadurch gekennzeichnet, dass** der bogenförmige Bügel (23) einen kreisförmigen Querschnitt besitzt.

5. Ventil nach zumindest einem der vorhergehenden Ansprüche, **dadurch gekennzeichnet, dass** der Bügel (23) auf seiner dem Boden (18) abgewandten Seite einen Schlitz (29) aufweist.

6. Ventil nach zumindest einem der vorhergehenden Ansprüche, **dadurch gekennzeichnet, dass** der bogenförmige Bügel (23) vom Kolben (17) weg gebogen ist.

7. Ventil nach zumindest einem der vorhergehenden Ansprüche, **dadurch gekennzeichnet, dass** der innerhalb des topfförmigen Kolbens (17) liegende Bereich (21) des Stifts (16) einen größeren Durchmesser als die Öffnung (22) besitzt.

8. Ventil nach zumindest einem der vorhergehenden Ansprüche, **dadurch gekennzeichnet, dass** der Stift (16) eine durchgehende Längsbohrung (26) besitzt.

9. Ventil nach Anspruch 8, **dadurch gekennzeichnet, dass** der Stift (16) eine rechtwinklig zur Längsachse und den Stift (16) durchdringende Querbohrung (27) besitzt, die mit der Längsbohrung (26) verbunden ist.

10. Ventil nach zumindest einem der vorhergehenden Ansprüche, **dadurch gekennzeichnet, dass** der Kolben (17) aus Kunststoff besteht.

11. Ventil nach zumindest einem der vorhergehenden Ansprüche, **dadurch gekennzeichnet, dass** der Kolben (17) zusätzlich Öffnungen (28) im Boden besitzt.

## Claims

1. Valve (10) having a housing (11), a solenoid (14) which is arranged in the housing (11), a pin (16) which can be moved by means of the solenoid (14), a piston (17) which is connected to the pin (16) and a seal, wherein the piston (17) is constructed in a pot-like manner and the base (18) thereof has an opening (22), and the pin (16) protrudes through the opening (22) in the base (18), **characterized in that**, at the outer side of the base (18), an arcuate curved member (23) spans the opening (22), and **in that** the pin (16) is connected to the arcuate curved member (23) by means of a catch connection (25).

2. Valve according to Claim 1, **characterized in that** the pin (16) at the end (21) thereof facing away from the solenoid (14) has a slot (24).

3. Valve according to Claim 2, **characterized in that** the slot (14) has a catch step (25) which preferably corresponds to the cross-section of the curved member (23).

4. Valve according to at least one of the preceding claims, **characterized in that** the arcuate curved member (23) has a circular cross-section.

5. Valve according to at least one of the preceding claims, **characterized in that** the curved member (23) has a slot (29) at the side thereof facing away from the base (18).

6. Valve according to at least one of the preceding claims, **characterized in that** the arcuate curved member (23) is bent away from the piston (17).

7. Valve according to at least one of the preceding claims, **characterized in that** the region (21) of the pin (16) located inside the pot-like piston (17) has a larger diameter than the opening (22).

8. Valve according to at least one of the preceding claims, **characterized in that** the pin (16) has a continuous longitudinal hole (26).

9. Valve according to Claim 8, **characterized in that** the pin (16) has a transverse hole (27) which extends at right-angles relative to the longitudinal axis and the pin (16) and which is connected to the longitudinal hole (26).

10. Valve according to at least one of the preceding claims, **characterized in that** the piston (17) comprises plastics material.

11. Valve according to at least one of the preceding claims, **characterized in that** the piston (17) has additional openings (28) in the base.

## Revendications

1. Soupape (10) comprenant un boîtier (11), un solénoïde (14) disposé dans le boîtier (11), une goupille (16) pouvant être déplacée par le solénoïde (14), un piston (17) connecté à la goupille (16) et un joint d'étanchéité, le piston (17) étant configuré en forme de pot et son fond (18) présentant une ouverture (22), et la goupille (16) pénétrant travers l'ouverture (22) dans le fond (18),
**caractérisée en ce**
**qu'**un étrier de forme courbe (23) surmonte l'ouverture (22) au niveau du côté extérieur du fond (18), et en ce que la goupille (16) est connectée à l'étrier de forme courbe (23) au moyen d'une connexion par encliquetage (25).

2. Soupape selon la revendication 1, **caractérisée en ce que** la goupille (16) présente une fente (24) au niveau de son extrémité (21) opposée au solénoïde (14).

3. Soupape selon la revendication 2, **caractérisée en ce que** la fente (14) possède un étage d'encliquetage (25), de préférence correspondant à la section transversale de l'étrier (23).

4. Soupape selon au moins l'une quelconque des revendications précédentes, **caractérisée en ce que** l'étrier de forme courbe (23) possède une section transversale de forme circulaire.

5. Soupape selon au moins l'une quelconque des revendications précédentes, **caractérisée en ce que** l'étrier (23) présente une fente (29) sur son côté opposé au fond (18).

6. Soupape selon au moins l'une quelconque des revendications précédentes, **caractérisée en ce que** l'étrier de forme courbe (23) est courbé à l'écart du piston (17).

7. Soupape selon au moins l'une quelconque des revendications précédentes, **caractérisée en ce que** la région (21) de la goupille (16) située à l'intérieur du piston en forme de pot (17) possède un plus grand diamètre que l'ouverture (22).

8. Soupape selon au moins l'une quelconque des revendications précédentes, **caractérisée en ce que** la goupille (16) possède un alésage longitudinal traversant (26).

9. Soupape selon la revendication 8, **caractérisée en ce que** la goupille (16) possède un alésage transversal (27) à angle droit par rapport à l'axe longitudinal et traversant la goupille (16), lequel est connecté à l'alésage longitudinal (26).

10. Soupape selon au moins l'une quelconque des revendications précédentes, **caractérisée en ce que** le piston (17) se compose de plastique.

11. Soupape selon au moins l'une quelconque des revendications précédentes, **caractérisée en ce que** le piston (17) possède en outre des ouvertures (28) dans le fond.
